# EUROPÄISCHE PATENTANMELDUNG

(11) **EP 2 450 846 A1**
(43) Veröffentlichungstag der Anmeldung: **09.05.2012**
(21) Anmeldenummer: 11008695.6
(22) Anmeldetag: 31.10.2011
(51) Int. Cl.: G06Q 90/00

(54) **Verfahren und Vorrichtung zur Auswahl von Stahlsorten**

(30) Priorität: 08.11.2010 DE 102010050488
(71) Anmelder: Abrams Engineering Services GmbH & Co. KG, 49084 Osnabrück (DE)
(72) Erfinder: Abrams, Jürgen, 49084 Osnabrück (DE)
(74) Vertreter: Aulich, Martin

(57) **Zusammenfassung**

Die Erfindung betrifft ein Verfahren zur Auswahl mindestens einer Stahlsorte aus einem in einem Speicher hinterlegten Datenbestand einer Grundgesamtheit mehrerer Stahlsorten mittels einer Datenverarbeitungseinrichtung, mit folgenden Schritten:
a) Anzeigen einer, von einem Benutzer betätigbaren Auswahleinrichtung (11) auf einem Anzeigemittel (12), mit der Werte von mindestens zwei, die Stahlsorten jeweils kennzeichnenden Stahlsortenmerkmale einstellbar sind,
b) Abfrage des Datenbestands nach einer Stahlsorte, zu der in dem Datenbestand Werte von Stahlsortenmerkmalen hinterlegt sind, die den eingestellten Werten der Stahlsortenmerkmale entsprechen oder die von den eingestellten Werten abhängige Bedingungen erfüllen,
c) falls diese Abfrage von einer Stahlsorte erfüllt wird und gegebenenfalls insofern diese Stahlsorte ein oder mehrere weitere Bedingungen erfüllt, Anzeigen dieser Stahlsorte bzw. von diese repräsentierenden Informationen auf dem Anzeigemittel (12).

## Beschreibung

Die vorliegende Erfindung betrifft ein Verfahren zur Auswahl mindestens einer Stahlsorte aus einem in einem Speicher hinterlegten Datenbestand einer Grundgesamtheit mehrerer Stahlsorten mittels einer Datenverarbeitungseinrichtung. Die Erfindung betrifft des Weiteren ein Programmprodukt zur Ausführung des Verfahrens sowie eine Datenverarbeitungseinrichtung mit einem Speicher, in dem ein solches Programmprodukt hinterlegt ist.

Es existiert eine Vielzahl von verschiedenen Stahlsorten. Die einzelnen Stahlsorten werden durch unterschiedliche Merkmale charakterisiert bzw. gekennzeichnet, wie etwa die Zerspanbarkeit, die Lieferhärte, die Stahlsortenbezeichnung und viele andere Merkmale mehr. Für Verwender von Stahl, insbesondere Unternehmen, ist es häufig äußerst schwierig, die für ihren jeweiligen Einsatzzweck am besten geeignete Stahlsorte schnell und fehlerfrei zu bestimmen.

Häufig sind dem Verwender für seinen speziellen Einsatzzweck mindestens zwei oder drei Kerneigenschaften bzw. Kernmerkmale wichtig, die die Stahlsorte aufweisen soll. Dies können beispielsweise ein bestimmter Zugfestigkeitswert, eine bestimmte Zerspanbarkeitseinstufung oder eine erreichbare Arbeitshärte sein. Dabei müssen die bestimmten Werte in der Regel von der jeweiligen Stahlsorte nicht exakt erreicht werden, sondern es genügt, wenn sich die tatsächlichen Werte der Kemmerkmale jeweils innerhalb vorgegebener Werteintervalle bewegen, geforderte Mindestwerte überschreiten oder maximal zulässige Werte unterschreiten. Stahlhersteller und -lieferanten bieten Informationen zu Stählen allerdings in der Regel nur eindimensional an, nicht jedoch beliebig kombinierbar oder erweitert mehrdimensional. Beispielsweise kann zwar eine Stahlsorte mit einem von dem Verwender gewünschten Zugfestigkeitswert recht schnell identifiziert werden. Allerdings genügt die identifizierte Stahlsorte dann gegebenenfalls nicht den Anforderungen an die weiteren Kernmerkmale, wie etwa der Zerspanbarkeit. Denn der Zerspanbarkeitswert der jeweiligen Stahlsorte wird erst dann abgefragt, wenn die dem gewünschten Zugfestigkeitswert entsprechende Stahlsorte bereits identifiziert bzw. vorausgewählt ist. Je größer die Anzahl von Kernmerkmalen ist, die jeweils von dem Verwender gewünschte Werte aufweisen sollen, desto schwieriger und langwieriger ist es, eine hierzu passende Stahlsorte zu identifizieren bzw. aus den möglichen Stahlsorten auszuwählen.

Hiervon ausgehend ist es Aufgabe der vorliegenden Erfindung, ein Verfahren der eingangs genannten Art anzugeben, mit dem in möglichst schneller, einfacher und zuverlässiger Weise aus einer Grundgesamtheit von Stahlsorten mindestens eine von dem Verwender gewünschte Stahlsorte identifizierbar ist. Des Weiteren ist es Aufgabe der vorliegenden Erfindung, ein entsprechendes Programmprodukt zur Ausführung des Verfahrens anzugeben sowie eine Datenverarbeitungseinrichtung, auf der das Programmprodukt ablaufen kann.

Diese Aufgabe wird gelöst durch ein Verfahren mit den Merkmalen des Anspruchs 1, durch ein Programmprodukt mit den Merkmalen des Anspruchs 9 sowie durch eine Datenverarbeitungseinrichtung mit den Merkmalen des Anspruchs 10.

Danach wird erfindungsgemäß ein Verfahren zur Auswahl mindestens einer Stahlsorte aus einem in einem Speicher hinterlegten Datenbestand einer Grundgesamtheit mehrerer Stahlsorten mittels einer Datenverarbeitungseinrichtung angegeben. Dabei wird auf einem Anzeigemittel, vorzugsweise einem Bildschirm, eine von einem Benutzer des Verfahrens betätigbare Auswahleinrichtung angezeigt. Mit der Auswahleinrichtung können von dem Benutzer Werte von mindestens zwei, die Stahlsorten jeweils kennzeichnenden Stahlsortenmerkmalen eingestellt werden. Anschließend erfolgt automatisch eine Abfrage des Datenbestands nach einer Stahlsorte, zu der in dem Datenbestand Werte von Stahlsortenmerkmalen hinterlegt sind, die den eingestellten Werten der Stahlsortenmerkmale entsprechen oder die von den eingestellten Werten abhängige Bedingungen bzw. Kriterien erfüllen. Falls diese Abfragebedingung von einer Stahlsorte erfüllt wird und gegebenenfalls insofern diese Stahlsorte eine oder mehrere weitere Bedingungen erfüllt, wird diese Stahlsorte auf dem Anzeigemittel angezeigt bzw. es werden die Stahlsorte repräsentierende Informationen angezeigt. Solche repräsentierenden Informationen können Bildelemente sein, numerische und/oder alphanumerische Stahlsortenbezeichnungen oder dergleichen.

Was die einstellbaren und die abfragbaren Stahlsortenmerkmale betrifft, so können dies Werkstoffeigenschaften der Stähle sein, Werkstoffzusammensetzungen, Behandlungen, denen die Stähle unterworfen wurden, und dergleichen mehr. Es ist beispielsweise auch denkbar, als ein einstellbares bzw. abfragbares Stahlsortenmerkmal die eindeutige Bezeichnung bzw. Kennung einer jeweiligen Stahlsorte vorzusehen. Dann könnten mittels vorbestimmter Algorithmen bzw. Bedingungen beispielsweise zu dieser eingestellten Stahlsortenkennung ähnliche Stahlsorten, etwa als Werkstoffalternativen, abgefragt werden.

Insgesamt führt die Datenverarbeitungseinrichtung erfindungsgemäß nach der Einstellung der entsprechenden Werte der Stahlsortenmerkmale innerhalb des Datenbestands bzw. innerhalb der Datenbank anhand vorbestimmter Kriterien bzw. Bedingungen automatisch einen Vergleich durch zwischen den für die jeweiligen Stahlsortenmerkmale eingestellten Werten und den zu den Stahlsorten jeweils in der Datenbank hinterlegten Werten der entsprechenden Stahlsortenmerkmale. Falls dieser Vergleich ergibt, dass die hinterlegten Werte der Stahlsortenmerkmale einer Stahlsorte den vorbestimmten Kriterien entsprechen, sowie gegebenenfalls insofern diese eine oder mehrere weitere Bedingungen erfüllen, wird die entsprechende Stahlsorte aus der Datenbank ausgewählt und auf dem Anzeigemittel angezeigt.

Ein Beispiel einer Bedingung, die von den jeweils eingestellten Werten der Stahlsortenmerkmale abhängt, und die der hinterlegte Wert des jeweiligen Stahlsortenmerkmals erfüllen muss, kann beispielsweise sein, dass der hinterlegte Wert in einem bestimmten Intervall um den eingestellten Wert des Stahlsortenmerkmals liegen muss.

Die Erfüllung einer solchen vorbestimmten Bedingung ist allerdings gegebenenfalls nicht ausreichend für die Auswahl und Anzeige einer Stahlsorte. Denn es kann naturgemäß vorgesehen sein, dass die jeweilige Stahlsorte bzw. die hinterlegten Werte der der Stahlsorte zugeordneten Stahlsortenmerkmale noch weitere, nicht unmittelbar mit den eingestellten Werten der Stahlsortenmerkmale zusammenhängende Bedingungen erfüllen muss/müssen, um angezeigt zu werden. Beispielsweise ist zumindest theoretisch denkbar, dass abhängig von dem Benutzer des Verfahrens nur bestimmte Stahlsorten aus der Grundgesamtheit an Stahlsorten überhaupt auswählbar sind.

Die Datenverarbeitungseinrichtung, auf der ein solches erfindungsgemäßes Verfahren ablaufen kann, kann jede Art von Vorrichtung sein, die mindestens über einen geeigneten Prozessor zur Abarbeitung der einzelnen Verfahrensschritte verfügt. Bei der Datenverarbeitungseinrichtung kann es sich dementsprechend beispielsweise um einen PC, ein Mobiltelefon, einen Laptop, einen Tablett-PC oder jede andere Art von Computer handeln. Das Anzeigemittel ist dabei in der Regel ein Bildschirm als Teil einer solchen Datenverarbeitungseinrichtung oder zumindest mit dieser verbunden. Natürlich kann das Verfahren auch in einem geeigneten Computemetzwerk umgesetzt sein, etwa im Rahmen eines Client-Server-Systems. Das Verfahren kann dementsprechend insbesondere im Internet umgesetzt werden. So kann etwa die Darstellung der Auswahleinrichtung und/oder der ausgewählten Stahlsorte in einem geeigneten Internet-Client, insbesondere einem Browser erfolgen. Die Datenbank, die Datenbankabfragen bzw. der gesamte Ablauf des erfindungsgemäßen Verfahrens - oder mindestens ein Teil desselben - könnte in diesem Fall auf einem entsprechenden, entfernt angeordneten Web- oder Anwendungsserver ablaufen bzw. dort softwaretechnisch umgesetzt sein.

Das erfindungsgemäße Verfahren ist dabei als (Computer-)Programmprodukt, also als Software, umgesetzt, das von einer solchen Datenverarbeitungseinrichtung abgearbeitet werden kann. In der Regel ist das Programmprodukt dann auf einem der Datenverarbeitungseinrichtung zugeordneten, gegebenenfalls auch entfernt von diesem angeordneten Speicher hinterlegt bzw. gespeichert.

Die Auswahleinrichtung zur Einstellung der Werte der Stahlsortenmerkmale ist bevorzugt Teil einer graphischen Benutzeroberfläche, die auf dem Anzeigemittel angezeigt wird. Sie kann von dem Benutzer etwa über eine geeignete Eingabeschnittstelle der Datenverarbeitungseinrichtung gesteuert werden. An die Eingabeschnittstelle kann als Eingabegerät beispielsweise ein üblicher Touchscreen angeschlossen sein, der in diesem Fall gleichzeitig als Anzeigemittel dient. Über bestimmte, eingabeaktive Felder auf dem Touchscreen kann die Auswahleinrichtung dann von dem Benutzer betätigt werden.

Natürlich können auch andere Eingabegeräte an die Eingabeschnittstelle angeschlossen sein, etwa eine Tastatur, eine Computermaus oder dergleichen.

Die Auswahleinrichtung verfügt vorzugsweise über mehrere betätigbare Anzeigemittel. Diese Anzeigemittel sind bevorzugt auf dem Anzeigemittel bzw. auf der auf dem Anzeigemittel angezeigten Benutzeroberfläche optisch voneinander getrennt. Sie können jeweils beispielsweise als eine Art Regler ausgebildet sein.

In einer besonders bevorzugten Ausführungsform der Erfindung wird auch die Grundgesamtheit an Stahlsorten, die grundsätzlich abhängig von den eingestellten Werten der Stahlsortenmerkmale auswählbar sind, teilweise oder vollständig auf dem Anzeigemittel angezeigt. Die Stahlsorten können dabei, wie oben bereits angedeutet, als Bildsymbole und/oder numerisch und/oder alphanumerisch oder in anderer Weise dargestellt sein. So können den einzelnen Stahlsorten beispielsweise jeweils rahmenartige Bildelemente zugeordnet sein, in denen jeweils eine die jeweilige Stahlsorte identifizierende Bezeichnung enthalten ist. Die einzelnen Bildelemente mit Bezeichnung werden vorzugsweise in einem Raster angezeigt, sodass ein Benutzer die einzelnen Bildelemente bzw. Stahlsorten der Grundgesamtheit an Stahlsorten optisch gut erfassen kann.

Sollte eine Stahlsorte die obige Abfrage erfüllen, d.h. von der Datenverarbeitungseinrichtung aufgrund der eingestellten Werte der Stahlsortenmerkmale als passend ausgewählt werden, wird diese vorzugsweise gegenüber den angezeigten, nicht ausgewählten Stahlsorten der Grundgesamtheit hervorgehoben, sodass diese Stahlsorte von dem Benutzer als ausgewählt bzw. als die Abfrage erfüllend identifizierbar ist.

Wenn mit anderen Worten der Benutzer mit der Auswahleinrichtung Werte von einzelnen Stahlsortenmerkmalen vorgibt, beispielsweise die Zugfestigkeit und die Zerspanbarkeit, werden die zu diesen Werten passenden Stahlsorten zunächst aus der Grundgesamtheit bzw. der Datenbank ausgewählt und anschließend innerhalb der auf dem Anzeigemittel bzw. der Benutzeroberfläche dargestellten Grundgesamtheit hervorgehoben. Die Hervorhebung erfolgt dabei vorzugsweise optisch, etwa durch Einfärbung der die einzelnen Stahlsorten repräsentierenden Bildelemente.

Besonders bevorzugt wird nach einer oder jeder Änderung von Werten der Stahlsortenmerkmale durch Betätigung der Auswahleinrichtung anhand der dann aktualisierten Werte die oben definierte Stahlsortenabfrage erneut durchgeführt und gegebenenfalls erneut eine die Abfrage - und gegebenenfalls die oben beschriebenen weiteren Bedingungen - erfüllende Stahlsorte auf dem Anzeigemittel angezeigt. Mit anderen Worten kann der Benutzer quasi interaktiv die einzelnen Werte der Stahlsortenmerkmale vorgeben bzw. einstellen, woraufhin unmittelbar im Anschluss die entsprechende Stahlsorte - insofern überhaupt eine Stahlsorte die Abfragebedingungen erfüllt - ausgewählt und angezeigt wird. Demnach wird die Anzeige der die Abfrage gegebenenfalls erfüllenden Stahlsorte jeweils aktualisiert, sobald der Benutzer die Werte der Stahlsortenmerkmale ändert bzw. sobald diese Änderung über die Auswahleinrichtung herbeigeführt wurde.

Zweckmäßigerweise wird dabei auch die (mindestens) eine anhand der aktualisierten Werte der Stahlsortenmerkmale gegebenenfalls ausgewählte Stahlsorte in der Grundgesamtheit hervorgehoben, wobei die vor der Aktualisierung der Werte gegenüber den restlichen Stahlsorten hervorgehobene Stahlsorte, insofern sie nach der Werteaktualisierung nicht (mehr) aus dem Datenbestand ausgewählt wird, auf dem Anzeigemittel nicht (mehr) hervorgehoben wird. Sie ist dann nicht mehr als ausgewählt erkennbar. Die optische Hervorhebung dieser zuvor ausgewählten Stahlsorte wird in diesem Fall nicht mehr aufrechterhalten bzw. zurückgesetzt.

In einer weiteren besonders wichtigen Ausführungsform der Erfindung wird die Auswahleinrichtung zur Einstellung der Werte der Stahlsortenmerkmale mindestens zeitweise gemeinsam mit der Grundgesamtheit der Stahlsorten auf dem Anzeigemittel angezeigt, insbesondere auf der gemeinsamen Benutzeroberfläche. Hierdurch wird eine besonders gute Bedienbarkeit und Übersichtlichkeit des erfindungsgemäßen Verfahrens erreicht. Der Benutzer sieht auf einen Blick sowohl die Stahlsortenmerkmale, die er einstellen kann, als auch die Ergebnisse, die die eingestellten Merkmale hervorrufen.

Vorzugsweise wird die Grundgesamtheit dabei mindestens während der Zeit, in der die Auswahleinrichtung zur Einstellung der Stahlsortenmerkmale betätigt wird, zusammen mit der Auswahleinrichtung angezeigt. Es bietet sich an, sowohl die Auswahleinrichtung als auch die Grundgesamtheit während der Benutzung des erfindungsgemäßen Verfahrens im Wesentlichen durchgehend gemeinsam bzw. gleichzeitig anzuzeigen.

In einer weiteren Ausführungsform der Erfindung können die Stahlsorten der Grundgesamtheit, die auf dem Anzeigemittel angezeigt werden, von einem Benutzer, insbesondere mittels des Eingabegeräts, auch ohne Betätigung der Auswahleinrichtung einzeln und direkt ausgewählt werden, beispielsweise, indem der Benutzer einen Touchscreen an einer Position berührt, an der die auszuwählende Stahlsorte gezeigt ist. Die auf diese Weise direkt ausgewählte Stahlsorte kann nach der Auswahl zweckmäßigerweise optisch gegenüber den nicht ausgewählten Stahlsorten hervorgehoben werden.

Nach so erfolgter Auswahl einer Stahlsorte werden dann die zu der ausgewählten Stahlsorte hinterlegten Werte von Stahlsortenmerkmalen aus dem Datenbestand abgefragt und an die Auswahleinrichtung als Ausgangswerte übergeben. Mit anderen Worten werden diese Werte in die Auswahleinrichtung übernommen bzw. an diese übergeben, sodass die Auswahleinrichtung auf diese Werte (vor-)eingestellt ist.

Beispielsweise kann vorgesehen sein, dass ein Benutzer aus den angezeigten Stahlsorten der Grundgesamtheit bereits vor einer ersten Betätigung der Auswahleinrichtung eine Stahlsorte direkt auswählt, die ihm bereits bekannt ist bzw. die er als für seinen Zweck wenigstens annähernd geeignet empfindet. Nach einer derartigen Auswahl werden die Werte der zu der ausgewählten Stahlsorte hinterlegten Stahlsortenmerkmale automatisch als Ausgangswerte an die Auswahleinrichtung übergeben. Anschließend kann der Benutzer beispielsweise ausgehend von diesen (vor-)eingestellten Ausgangswerten durch Betätigung der Auswahleinrichtung den Wert eines bestimmtes Stahlsortenmerkmals - bei ansonsten unveränderten Ausgangswerten - ändern, um gezielt zu der direkt von dem Benutzer ausgewählten Stahlsorte ähnliche Stahlsorten zu bestimmen. Naturgemäß können auch mehrere Werte von Stahlsortenmerkmalen verändert werden.

Eine solche direkte Auswahl einer Stahlsorte aus der Grundgesamtheit durch einen Benutzer mit anschließender Übergabe der zu der Stahlsorte hinterlegten Werte von Stahlsortenmerkmalen an die Auswahleinrichtung kann alternativ natürlich auch nach einer erstmaligen Betätigung der Auswahleinrichtung durch den Benutzer erfolgen. In diesem Fall würden die aktuellen Werte, die in der Auswahleinrichtung durch deren zuvor erfolgte Betätigung eingestellt sind, durch die vorgenannten Ausgangswerte überschrieben werden.

Weitere Merkmale der Erfindung ergeben sich aus den beigefügten Ansprüchen, der nachfolgenden Beschreibung eines bevorzugten Ausführungsbeispiels sowie aus den beigefügten Zeichnungen. Darin zeigt:
- Fig. 1: eine Benutzeroberfläche als Teil einer Umsetzung des erfindungsgemäßen Verfahrens zur Auswahl von Stahlsorten in einem ersten Verfahrenszustand,
- Fig. 2: die Benutzeroberfläche aus Fig. 1 in einem zweiten Verfahrenszustand.

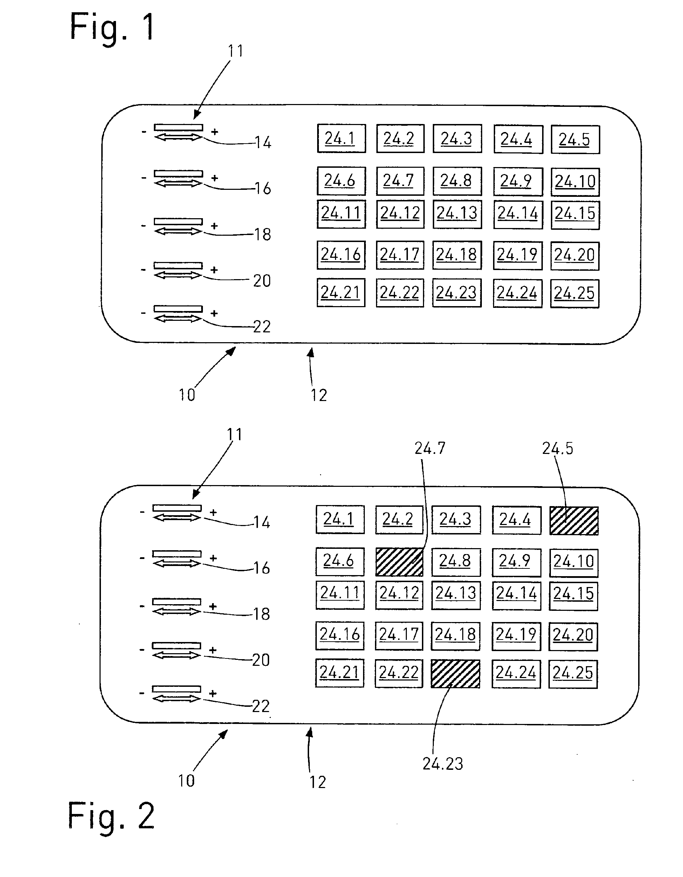

In den Fig. 1, 2 ist eine Benutzeroberfläche 10 dargestellt, die auf einem Anzeigemittel angezeigt wird, im vorliegenden Fall einem Touchscreen-Bildschirm 12. Der Touchscreen 12 bzw. die Benutzeroberfläche 10 sind Teil einer ansonsten nicht weiter dargestellten, erfindungsgemäß eingerichteten Datenverarbeitungseinrichtung.

Ein Benutzer kann mithilfe der Datenverarbeitungseinrichtung die Werte verschiedener Merkmale von Stahlsorten vorgeben. Abhängig von den eingestellten Werten wählt die Datenverarbeitungseinrichtung - insofern möglich - eine oder mehrere Stahlsorten aus. Die jeweilige Stahlsorte wird ausgewählt aus einer in einer nicht dargestellten Datenbank hinterlegten Grundgesamtheit bzw. Menge oder Vielzahl von Stahlsorten. Dabei wird nur jeweils diejenige Stahlsorte (gegebenenfalls mehrere Stahlsorten) ausgewählt, die den von dem Benutzer vorgegebenen bzw. eingestellten Werten entspricht bzw. die - allgemein gesprochen - von diesen Werten abhängige Bedingungen erfüllt. Anschließend wird diese Stahlsorte bzw. Informationen, die diese Stahlsorte kennzeichnen, auf dem Anzeigemittel 12 angezeigt.

Sowohl die Benutzeroberfläche 10 als auch das nachfolgend noch näher beschriebene Verfahren der Auswahl und Anzeige bestimmter Stahlsorten ist in geeigneter Weise durch ein entsprechendes Programm in der Datenverarbeitungseinrichtung umgesetzt bzw. läuft auf dieser ab.

Die Datenverarbeitungseinrichtung verfügt hierzu mindestens über einen Prozessor, der die entsprechenden, programmtechnisch umgesetzten Verfahrensabläufe abarbeiten kann. Zudem ist der Datenverarbeitungseinrichtung ein Speicher zugeordnet, in dem das abzuarbeitende Programm hinterlegt ist. In der Regel verfügt die Datenverarbeitungseinrichtung über einen festen Speicher sowie zusätzlich über einen sogenannten Arbeitsspeicher.

Im vorliegenden Fall ist die Datenverarbeitungseinrichtung als sogenannter Tablett-PC ausgebildet.

Als Eingabegerät des Tablett-PCs zur Eingabe bzw. zum Einstellen von Daten dient der Touchscreen 12. Die in den Fig. 1, 2 auf dem Touchscreen 12 dargestellte Benutzeroberfläche 10 weist zu diesem Zweck eine von einem Benutzer durch geeignete Berührung des Touchscreens 12 betätigbare Auswahleinrichtung 11 auf. Mit der Auswahleinrichtung 11 können Werte von bestimmten vorgegebenen, einige oder sämtliche Stahlsorten der Grundgesamtheit beschreibenden bzw. charakterisierenden Merkmalen eingestellt werden.

Hierzu verfügt die Auswahleinrichtung 11 über im vorliegenden Fall fünf Auswahlmittel 14, 16, 18, 20, 22. Bei diesen Auswahlmittein 14-22 handelt es sich um reglerartige Bedienelemente, die ein Benutzer durch geeignete Berührung des Touchscreens 12 betätigen kann.

Jedem Auswahlmittel 14-22 ist jeweils ein Stahlsortenmerkmal zugeordnet. Dem Regler 14 ist beispielsweise das Merkmal "Zerspanbarkeit" zugeordnet, die die gewünschte Stahlsorte aufweisen soll. Dem Regler 16 ist die Zugfestigkeit der Stahlsorte zugeordnet, dem Regler 18 die Arbeitshärte, dem Regler 20 die Verschleißbeständigkeit und dem Regler 22 die Zähigkeit.

Es liegt naturgemäß im Rahmen der Erfindung, eine andere Art und/oder Anzahl von Auswahleinrichtungen bzw. andere Arten von Auswahlmitteln vorzusehen und/oder den Auswahlmittein andere Stahlsortenmerkmale zuzuordnen.

Mit den Reglern 14-22 kann der Benutzer die Werte des ihnen jeweils zugeordneten Stahlsortenmerkmals einstellen. Durch Betätigung des "+"-Zeichens des Reglers 14 kann ein Benutzer beispielsweise den Wert der Zerspanbarkeit erhöhen, die die gewünschte Stahlsorte aufweisen soll. Bei Betätigung des Zeichens "-" würde der Wert der gewünschten Zerspanbarkeit erniedrigt werden. In analoger Weise können die Werte der den einzelnen Reglern 16-22 zugeordneten Stahlsortenmerkmale verändert bzw. angepasst werden.

Auf der Benutzeroberfläche 10 sind in einem Raster rechts neben der Auswahleinrichtung 11 bzw. neben den Reglern 14-22 einzelne rahmenartige Bildelemente 24.1-24.25 angeordnet. Jedem Bildelement 24.1-24.25 ist jeweils eindeutig genau eine Stahlsorte aus der Grundgesamtheit an Stahlsorten zugeordnet. Mit anderen Worten repräsentiert die Menge (25 Bildelemente) an Bildelementen 24.1-24.25 auf der Benutzeroberfläche 10 die Grundgesamtheit an Stahlsorten.

Jede Stahlsorte ist individuell identifizierbar über eine entsprechende, in den Fig. 1, 2 nicht dargestellte Bezeichnung, die jeweils in die Mitte des jeweiligen Bildelements 24.1-24.25 geschrieben ist. Auf die Art der verwendeten Stahlsortenbezeichnung kommt es erfindungsgemäß nicht an. Es können normgerechte Bezeichnungen für die Stahlsorten verwendet werden, aber auch sprechende Kurznamen, Zahlenkombinationen oder dergleichen.

Die einzelnen Stahlsorten sind in einem Speicher, nämlich in einer Datenbank der Datenverarbeitungseinrichtung bzw. des Tablett-PCs gespeichert. In einer entsprechenden Tabelle sind zu jeder Stahlsorte bzw. zu einer die Stahlsorte identifizierenden Kennung bzw. Bezeichnung jeweils Werte der die Stahlsorte charakterisierenden Stahlsortenmerkmale hinterlegt. Im vorliegenden Fall sind in der Tabelle zu jeder Stahlsorte Werte derjenigen Stahlsortenmerkmale gespeichert, die mit der Auswahleinrichtung 11 bzw. den Reglern 14-22 einstellbar sind. Mit anderen Worten ist in der Tabelle zu jeder Stahlsorte jeweils ein Wert zur Zerspanbarkeit, zur Zugfestigkeit, zur Arbeitshärte, zur Verschleißbeständigkeit und zur Zähigkeit hinterlegt.

Es kommt naturgemäß nicht auf die Art der Visualisierung der Stahlsorten an. Es könnten auch vollständig andere, d.h. sich optisch unterscheidende Bildelemente als die dargestellten, rahmenartigen Bildelemente 24.1-24.25 verwendet werden. Es ist weiter denkbar, auf die Bildelemente 24.1-24.25 gänzlich zu verzichten und ausschließlich die Bezeichnungen der jeweiligen Stahlsorte zu verwenden bzw. darzustellen. Wie der Fachmann des Standes der Technik erkennt, sind hier viele Möglichkeiten der graphischen Darstellung denkbar.

Das erfindungsgemäße Verfahren läuft im vorliegenden Fall wie folgt ab:
Nach jeder Betätigung eines der Regler 14-22 startet die Datenverarbeitungseinrichtung eine Abfrage in der Datenbank. Die Abfrage ermittelt anhand der gültigen bzw. aktuellen Merkmalswerte, ob eine Stahlsorte aus der Datenbank den eingestellten Merkmalswerten oder - allgemein gesprochen - von diesen abgeleiteten, vorbestimmten Bedingungen entspricht. Abhängig von den eingestellten Werten wird dementsprechend jede Stahlsorte aus der Datenbank ausgewählt, die den voreingestellten Merkmalswerten entspricht oder - gemäß einem geeigneten Algorithmus - diesen am nächsten kommt.

So wird im einfachsten Fall abgefragt, ob zu einer oder zu mehreren Stahlsorten in der Datenbank Werte von Stahlsortenmerkmalen hinterlegt sind, die den aktuell mit den Reglern 14-22 eingestellten Werten entsprechen.

Gemäß einer komplexeren Abfrage kann beispielsweise eine Prüfung dahingehend erfolgen, ob zu einer oder zu mehreren Stahlsorten in der Datenbank Werte von einem bestimmten Stahlsortenmerkmal hinterlegt sind, die jeweils in einem Intervall liegen, das durch den korrespondierenden, an dem jeweiligen Regler 14-22 eingestellten Wert und einer bestimmten Abweichung von diesem Wert, beispielsweise 10%, definiert ist.

Wie der Fachmann des Standes der Technik erkennt, gibt es für die Art der Abfragen verschiedenste Möglichkeiten.

In Fig. 2 ist ein Verfahrenszustand gezeigt, bei dem die eingestellten Werte der Stahlsortenmerkmale dazu geführt haben, dass durch die Datenverarbeitungseinrichtung drei Stahlsorten aus der Datenbank als zu den Werten passend ausgewählt wurden. Nach Auswahl der drei Stahlsorten werden die diese Stahlsorten repräsentierenden Bildelemente 24.5, 24.7, 24.23 innerhalb der durch die Bildelemente 24.1-24.25 symbolisierten Grundgesamtheit an Stahlsorten optisch gegenüber den nicht ausgewählten Stahlsorten in besonderer Weise hervorgehoben. Diese Hervorhebung ist in der Fig. 2 durch eine Schraffur der Bildelemente 24.5, 24.7, 24.23 dargestellt.

Auf die Art der optischen Hervorhebung der ausgewählten Stahlsorten kommt es naturgemäß nicht an. Entscheidend ist, dass ein Benutzer die Hervorhebung gegenüber den nicht ausgewählten Stahlsorten erkennen kann.

In dem vorliegenden Ausführungsbeispiel löst jede Änderung eines Wertes eines Stahlsortenmerkmals den vorgenannten Verfahrensablauf aus. Sollten bei der nächsten Änderung eines oder mehrere Werte der Stahlsortenmerkmale andere Stahlsorten aus der Datenbank als zu den eingestellten Werten passend ausgewählt werden, werden diese anderen Stahlsorten hervorgehoben bzw. die diese repräsentierenden Bildelemente 24.1-24.25. Die zuvor hervorgehobenen Bildelemente 24.5, 24.7, 24.23 werden optisch wieder den nicht hervorgehobenen Bildelementen angepasst.

Weiter ist vorgesehen, zu den einzelnen Stahlsorten bzw. zu den einzelnen Bildelementen auf Wunsch des Benutzers nähere Informationen aufzurufen. So werden bei Berührung des Touchscreens 12 an den einzelnen Positionen der Bildelemente 24.1-24.25 jeweils Detailinformationen zu der dem jeweiligen Bildelement 24.1-24.25 zugeordneten Stahlsorte angezeigt, wie etwa sämtliche verfügbaren Werte zu den Stahlsortenmerkmalen oder dergleichen. Diese Detailinformationen können beispielsweise auf einem separaten Abschnitt oder Fenster der Bildschirmoberfläche erscheinen.

Schließlich ist vorgesehen, dass ein Benutzer aus den Stahlsorten bzw. Bildelementen 24.1-24.25 eine Stahlsorte bzw. ein Bildelement direkt, nämlich unter Umgehung der Auswahleinrichtung 11, auswählen kann. Die Auswahl erfolgt durch geeignete Berührung des Touchscreens 12 an den jeweiligen Positionen, an denen die Bildelemente 24.1-24.25 angezeigt sind. Nach einer solchen Auswahl eines der Bildelemente 24.1-24.25 werden automatisch die in der Datenbank zu der entsprechenden, direkt ausgewählten Stahlsorte hinterlegten Werte von Stahlsortenmerkmalen als Ausgangswerte an die Auswahleinrichtung 11 übergeben. Dabei werden die Regler 14-22 auf die aus der Datenbank abgerufenen Werte eingestellt.

Wenn beispielsweise ein Benutzer das Bildelement 24.10 direkt auswählt, werden die Regler 14-22 automatisch auf die zu der dem Bildelement 24.10 zugeordneten Stahlsorte 24.10 hinterlegten Werte zur Zerspanbarkeit, zur Zugfestigkeit, zur Arbeitshärte, zur Verschleißbeständigkeit und zur Zähigkeit voreingestellt.

Dies ermöglicht einem Benutzer beispielsweise, zunächst eine ihm bereits bekannte Stahlsorte aus der dargestellten Grundgesamtheit direkt auszuwählen. Ausgehend von den zu der direkt ausgewählten Stahlsorte hinterlegten Werten können Stahlsortenalternativen bestimmt werden, die sich von der direkt ausgewählten Stahlsorte zwar in einem bestimmten Wert eines Stahlsortenmerkmals unterscheiden, die sich aber in anderen Werten von Stahlsortenmerkmalen gleichen. So kann dann etwa durch Betätigung nur des Reglers 16 für die Zugfestigkeit eine Stahlsortenalternative zu der dem Bildelement 24.10 entsprechenden Stahlsorte bestimmt werden, deren Zugfestigkeitswerte andere, insbesondere bezogen auf den gewünschten Einsatzzweck bessere Werte aufweist als die dem Bildelement 24.10 entsprechende Stahlsorte.

Natürlich können hierbei ausgehend von den Ausgangswerten auch zwei oder mehr Regler 14-22 zur Veränderung der Ausgangswerte betätigt werden bzw. die Werte von zwei oder mehr Stahlsortenmerkmalen verändert werden.

Nach Betätigung der Regler 14-22 würde, wie bereits weiter oben beschrieben, die mindestens eine, dann zu den veränderten Reglerwerten passende Stahlsorte ermittelt und das die ermittelte Stahlsorte repräsentierende Bildelement 24.1-24.25 hervorgehoben werden.

### Bezugszeichenliste:

- 10: Benutzeroberfläche
- 11: Auswahleinrichtung
- 12: Touchscreen
- 14: Regler
- 16: Regler
- 18: Regler
- 20: Regler
- 22: Regler
- 24: Bildelement

## Patentansprüche

1. Verfahren zur Auswahl mindestens einer Stahlsorte aus einem in einem Speicher hinterlegten Datenbestand einer Grundgesamtheit mehrerer Stahlsorten mittels einer Datenverarbeitungseinrichtung, mit folgenden Schritten:
a) Anzeigen einer, von einem Benutzer betätigbaren Auswahleinrichtung (11) auf einem Anzeigemittel (12), mit der Werte von mindestens zwei, die Stahlsorten jeweils kennzeichnenden Stahlsortenmerkmale einstellbar sind,
b) Abfrage des Datenbestands nach einer Stahlsorte, zu der in dem Datenbestand Werte von Stahlsortenmerkmalen hinterlegt sind, die den eingestellten Werten der Stahlsortenmerkmale entsprechen oder die von den eingestellten Werten abhängige Bedingungen erfüllen,
c) falls diese Abfrage von einer Stahlsorte erfüllt wird und gegebenenfalls insofern diese Stahlsorte ein oder mehrere weitere Bedingungen erfüllt, Anzeigen dieser Stahlsorte bzw. von diese repräsentierenden Informationen auf dem Anzeigemittel (12).

2. Verfahren gemäß Anspruch 1, **dadurch gekennzeichnet, dass** die Grundgesamtheit an Stahlsorten teilweise oder vollständig auf dem Anzeigemittel (12) angezeigt wird und dass die (mindestens eine), die Abfrage erfüllende Stahlsorte dabei vorzugsweise optisch gegenüber den angezeigten, die Abfrage nicht erfüllenden Stahlsorten der Grundgesamtheit hervorgehoben wird, sodass die Stahlsorte als die Abfrage erfüllend identifizierbar ist.

3. Verfahren gemäß Anspruch 1 oder 2, **dadurch gekennzeichnet, dass** nach einer oder jeder Änderung von Werten der Stahlsortenmerkmale durch Betätigung der Auswahleinrichtung (11) anhand der aktualisierten Werte die Abfrage erneut durchgeführt und gegebenenfalls eine die Abfrage und gegebenenfalls die weiteren Bedingungen erfüllende Stahlsorte auf dem Anzeigemittel (12) angezeigt wird.

4. Verfahren gemäß Anspruch 3, **dadurch gekennzeichnet, dass** die vor der Aktualisierung der Werte gegenüber den restlichen Stahlsorten hervorgehobene Stahlsorte, insofern sie nach der Aktualisierung der Werte der Stahlsortenmerkmale die Abfrage nicht mehr erfüllt, auf dem Anzeigemittel nicht (mehr) hervorgehoben wird, sodass sie nicht mehr als ausgewählt identifizierbar ist.

5. Verfahren gemäß einem oder mehreren der vorhergehenden Ansprüche, **dadurch gekennzeichnet, dass** die Auswahleinrichtung (11) mindestens zeitweise gemeinsam mit der Grundgesamtheit auf dem Anzeigemittel angezeigt wird.

6. Verfahren gemäß Anspruch 5, **dadurch gekennzeichnet, dass** die Grundgesamtheit mindestens während der Betätigung der Auswahleinrichtung (11) zur Einstellung der Stahlsortenmerkmale zusammen mit der Auswahleinrichtung angezeigt wird.

7. Verfahren gemäß einem oder mehreren der vorhergehenden Ansprüche, **dadurch gekennzeichnet, dass** die Grundgesamtheit an Stahlsorten teilweise oder vollständig auf dem Anzeigemittel (12) angezeigt wird, und dass die angezeigten Stahlsorten durch einen Benutzer einzeln auswählbar sind, wobei nach erfolgter Auswahl einer Stahlsorte die zu der ausgewählten Stahlsorte hinterlegten Werte von Stahlsortenmerkmalen aus dem Datenbestand abgefragt und an die Auswahleinrichtung (11) als Ausgangswerte übergeben werden, sodass an der Auswahleinrichtung diese Ausgangswerte eingestellt sind.

8. Verfahren gemäß einem oder mehreren der vorhergehenden Ansprüche, **dadurch gekennzeichnet, dass** die Auswahleinrichtung (11) über mehrere, optisch auf dem Anzeigemittel (12) voneinander getrennte Auswahlmittel (14-22) verfügt, wobei vorzugsweise jedem Auswahlmittel (14-22) ein Stahlsortenmerkmal zugeordnet ist.

9. Programmprodukt zur Ausführung des Verfahrens nach Anspruch 1, wenn es auf einer programmtechnisch eingerichteten Datenverarbeitungseinrichtung abläuft, insbesondere einem PC, einem Client-Server-System, einem Mobiltelefon, einem Laptop oder dergleichen.

10. Datenverarbeitungseinrichtung zur Ausführung des Verfahrens nach Anspruch 1, mit einem in einem der Datenverarbeitungseinrichtung zugeordneten Speicher hinterlegten Programmprodukt gemäß Anspruch 9.
